Europäisches Patentamt

European Patent Office

Office européen des brevets

(19)

(11) **EP 1 145 344 B1**

(12) **EUROPEAN PATENT SPECIFICATION**

(45) Date of publication and mention
of the grant of the patent:
**03.03.2004 Bulletin 2004/10**

(21) Application number: **99966532.6**

(22) Date of filing: **21.12.1999**

(51) Int Cl.$^7$: **H01M 2/08**

(86) International application number:
**PCT/US1999/030522**

(87) International publication number:
**WO 2000/039863 (06.07.2000 Gazette 2000/27)**

(54) **IMPACT MODIFIED POLYSTYRENE SEALS FOR ELECTROCHEMICAL CELLS**

SCHLAGZÄHMODIFIZIERTE POLYSTYROLDICHTUNGEN FÜR ELEKTROCHEMISCHE ZELLEN

JOINTS EN POLYSTYRENE PRESENTANT UNE CARACTERISTIQUE DE MODIFICATION D'IMPACT POUR PILES ELECTROCHIMIQUES

(84) Designated Contracting States:
**AT BE CH CY DE DK ES FI FR GB GR IE IT LI LU MC NL PT SE**

(30) Priority: **29.12.1998 US 222144**

(43) Date of publication of application:
**17.10.2001 Bulletin 2001/42**

(73) Proprietor: **Eveready Battery Company, Inc.
Westlake, Ohio 44145-0616 (US)**

(72) Inventor: **SCHUBERT, Mark, A.
Brunswick, Ohio 44212 (US)**

(74) Representative: **Fairbairn, Angus Chisholm
Marks & Clerk,
57-60 Lincoln's Inn Fields
London WC2A 3LS (GB)**

(56) References cited:
**EP-A- 0 874 408           WO-A-94/22175
US-A- 4 343 869           US-A- 5 395 890**

• **PATENT ABSTRACTS OF JAPAN vol. 1998, no. 06, 30 April 1998 (1998-04-30) & JP 10 050278 A (MATSUSHITA ELECTRIC IND CO LTD), 20 February 1998 (1998-02-20)**

**Description**

This invention relates to improved sealing members for electrochemical cells, such as seals for alkaline galvanic cells and sealing gaskets for miniature cells. and particularly to non-ventable gaskets for miniature air cells.

Electrochemical cells, such as miniature alkaline air cells, are stable, high-energy sources for electrical devices, such as hearing aids. An alkaline electrolyte must be sealed within the confines of the cell to prevent corrosive damage to the exterior of the cell and possibly to the electrical device in which it is housed.

In the case of a miniature air cell, a continuous supply of air must be provided to the surface of the air electrode. Generally, a miniature alkaline air cell comprises an. outer metal container having at least one air opening in its base to provide air to the active air electrode, a hydrophobic film layer, an air electrode. a separator layer, an anode mask, and an electrolyte. The cell assembly is capped with a gasket and metal cell cover which seals the open end of the cell container thereby sealing in the alkaline electrolyte. The term "gasket" as used herein refers to a non-ventable sealing member for providing a fluid-tight joint between battery components.

Seals for galvanic cells, including gaskets for alkaline air cells, have generally been made from nylon, polypropylene or polysulphone. with nylon being preferred, especially nylon 66. However, nylon seals for alkaline galvanic cells, including nylon gaskets for miniature alkaline air cells, have major disadvantages.

First, nylon absorbs moisture making it susceptible to hydrolytic degradation in a corrosive electrolyte. As a result of the tendency for nylon to absorb moisture, it must be dried prior to moulding. After moulding, the dimensions and properties of the resulting seal or gasket are affected by the tendency of nylon to absorb moisture. Hydrolytic degradation of nylon occurs through chain scission of amide bonds. Chain scission embrittles the material, leading to seal failure and leakage of the cell. Thus, in the case of a nylon gasket. embrittlement makes the gasket susceptible to stress cracking which leads to gasket failure and leakage of electrolyte from the cell.

To overcome this in alkaline galvanic cells, protective coatings are sometimes used on the internal side of the seal. In particular, nylon seals for alkaline galvanic cells are generally provided with an asphaltic coating. Application of the asphaltic coating involves additional steps and materials which increase the overall cost of the seal.

Another problem with nylon seals for alkaline galvanic cells is that they have a relatively high ultimate elongation. For safety reasons, seals for alkaline galvanic cells are designed to provide controlled release of pressure in the event that the internal pressure of the galvanic cell increases beyond an acceptable limit. This is achieved by forming the seal with a relatively thin portion which is designed to rupture if the internal pressure of the galvanic cell increases beyond an acceptable limit. Sufficient space must be provided within the cell to allow the thin portion to extend and rupture. Under normal moisture conditions, nylon extends over 300% of its initial length. This high level of elongation requires large amounts of internal cell space which limits the seal and cell design. Accordingly, it would be desirable to utilise a material for seal construction which meets the necessary physical and chemical requirements for use as a seal material in an alkaline cell, and which has a relatively lower ultimate elongation.

Another disadvantage with nylon galvanic cell seals is that the physical properties of the seal are dependent upon the moisture content of the nylon. In particular, the strength of nylon is dependent upon its moisture content, which in turn is dependent upon relative humidity. Accordingly. the vent pressure, i.e. the pressure at which the thin portion of the seal ruptures, of nylon galvanic cell seals is undesirably dependent on relative humidity.

Galvanic cell seals made of polypropylene are subject to extensive softening at the high end of possible use temperatures, i.e. 75-85°C. This softening results in lower deflection temperatures under load and excessive stress relaxation in the compressive sealing zones of the seal and hence leakage of electrolyte and unreliable cell performance.

The use of polysulphone as a material for making galvanic cell seals has been relatively limited on account of its relatively high cost (approximately 2.5 times the cost of nylon 66). In addition to its relatively high cost, polysulphone also has a tendency to absorb moisture, and must be dried to a moisture content of less than or about 0.02% before it can be moulded into a seal. This extra step of drying polysulphone before it can be moulded further increases the overall cost of forming a galvanic cell seal from polysulphone.

We have now found, surprisingly, that galvanic cell seals having improved performance characteristics and other advantages, as compared with known seals, can be provided, if made or comprised of certain styrenic polymer blends. In particular, as compared with conventional seals, especially nylon, seals made of the styrenic polymer blends exhibit excellent chemical resistance to alkaline medium, absorb very little water, have a low coefficient of linear thermal expansion, exhibit good heat resistance properties at higher pressures, cool quickly after moulding, have a low melt viscosity, have relatively low tensile strength, have high impact toughness, have a relatively high glass transition temperature, have a relatively low elongation to break, and higher hydrogen permeability. These properties result in a galvanic cell seal which can be manufactured at a much lower cost, and which exhibits excellent performance characteristics which do not vary significantly over the range of temperatures and relative humidity encountered during cell use.

We have also found that a gasket for a miniature alkaline air cell can be provided that is less sensitive to moisture and hydrolytic degradation, by forming the gasket of certain styrenic polymer blends. As a result, the use in a miniature alkaline air cell of a gasket which is formed of the styrenic polymer blend can provide a miniature alkaline air cell which is substantially less likely to exhibit electrolyte leakage on account of gasket failure.

Accordingly, in a first aspect, the present invention provides a galvanic cell having a sealing member formed of a styrenic polymer blend. More particularly, the styrenic polymer blend is formed of polystyrene and polybutadiene rubber to form a styrenic phase and discrete rubbery phase. In one embodiment, the sealing member is a gasket for a miniature cell, in particular a miniature alkaline air cell.

In a second aspect, the present invention provides a galvanic cell including a sealing member as defined above. In one embodiment, the cell is a miniature alkaline air cell and the sealing member is a gasket for the miniature alkaline air cell.

In a preferred embodiment of the second aspect, a miniature air cell is provided comprising:

a container having a base, an upright sidewall and an open-ended top, and having at least one air opening in the base;

a cell assembly housed in the container having an air electrode in electrical contact with the container, an anode material situated above the air electrode, a separator layer between the air electrode and the anode material, and an electrolyte in ionic contact with the air electrode and the anode material;

a cell cover in electrical contact with said anode material; and

an electrically insulating gasket interposed and compressed between the cell container and cover, the gasket formed of the styrenic polymer blend.

Preferably, the styrenic polymer blend includes an anti-stress relaxation agent, preferably poly(phenylene oxide) or an inorganic filler.

The present invention will be further understood by reference to the drawings, in which:

Figure 1 is a perspective view of a typical cylindrical alkaline cell with portions broken away to show the construction thereof;

Figure 2 is a graph of stress relaxation verses time at room temperature for Noryl® EM6100, HIPS and Zytel® 101F;

Figure 3 is a graph of rate of stress relaxation verses time for Noryl® EM6100, HIPS and Zytel® 101F;

Figure 4 is a sectional side elevation view taken through an assembled miniature alkaline air cell; and

Figure 5 is a partial cross-sectional side view of the assembly of Figure 4.

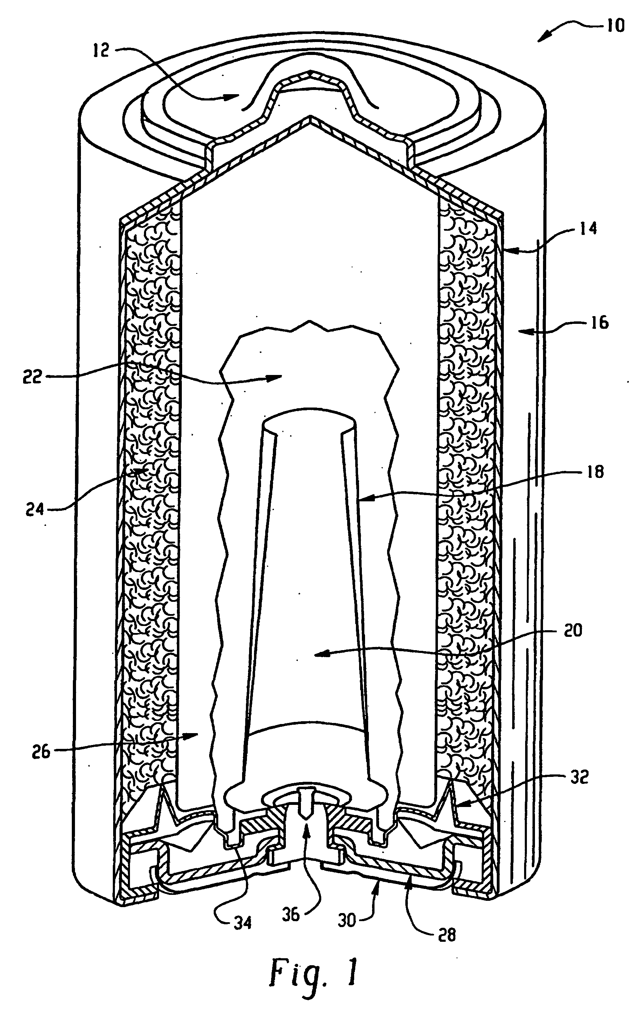

Shown in Figure 1 is a typical cylindrical alkaline galvanic cell or battery 10. Battery 10 includes a plated steel positive cover 12, a steel can 14, a metallised plastic film label 16, powdered zinc anode 18, brass current collector 20, potassium hydroxide electrolyte 22, a manganese dioxide and carbon cathode 24, a non-woven fabric separator 26, a steel inner cell cover 28, and a plated steel negative cover 30. Interposed between the alkaline potassium hydroxide electrolyte 22 and steel inner cell cover 28 is a seal 32.

Seal 32 performs four important functions. First, it serves as an electrical insulator which electrically isolates steel can 14 from the anode. Second, seal 32 prevents electrolytes from leaking from the battery. Third, seal 32 includes a relatively thin area 34 which is designed to rupture in the event that the internal pressure of the battery exceeds a predetermined limit. Fourth, seal 32 regulates the rate of hydrogen gas egress from the battery cell.

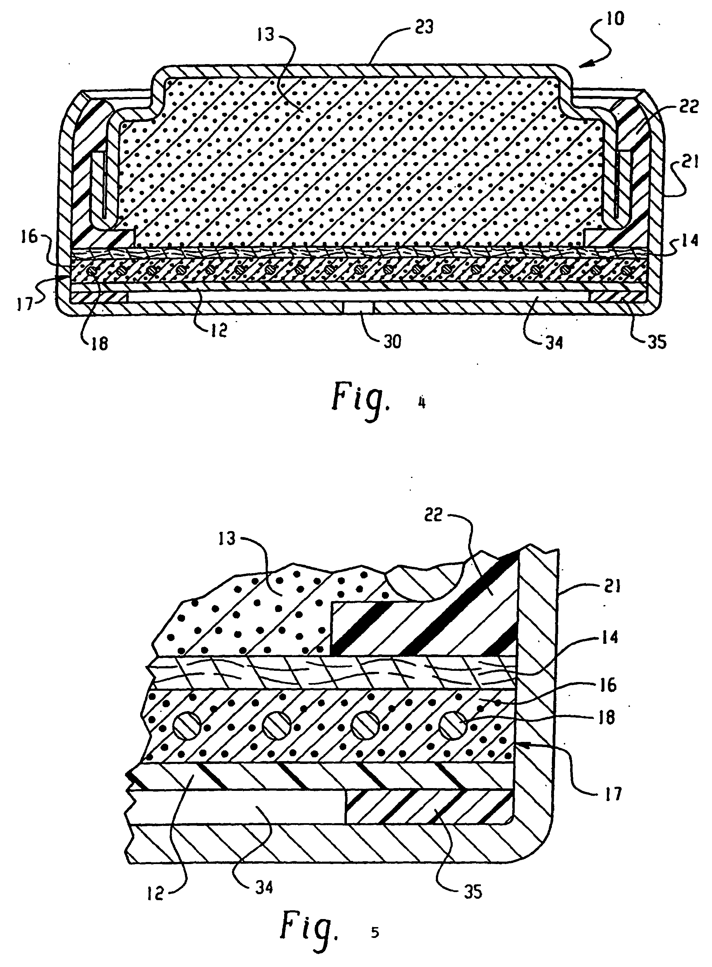

Referring to Figures 4 and 5, there is shown a sectional side elevation of a miniature alkaline air cell 10. The internal cell components comprise an air electrode 17, which is a laminated electrode that has a first layer 16 which may comprise a mixture of active materials such as activated carbon and binder, a second layer 18 which is a current collector, and a third layer 12 which is a hydrophobic membrane. The internal components also comprise an anode mask 13, and a separator layer 14 between the air electrode and the anode mask. Separator layer 14 permits passage of electrolyte ions but prevents migration of ions in the air electrode to the anode mask. The internal cell components 10, 12, 13, 14, 16, 17 and 18 are housed in container 21 which is in intimate electrical contact with the current collector 18 and sealed at its open end by an electrically insulating sealing gasket 22 and cell cover 23 which is in electrical contact with anode 3. Sealing gasket 22 is radially squeezed between cell container 21 and cover 23 so as to form a primary barrier to electrolyte leakage. The base of container 21 includes at least one air opening 30 which provides ingress and egress of air within air diffusion chamber 34 to air electrode 17. The container base may be separated from the air electrode by a thin resiliently deformable ring 35.

Sealing gasket 22 may be formed, such as by injection moulding, and inserted between container 21 and cell cover 23 during assembly of cell 10. Alternatively, sealing gasket 22 can be formed by insert moulding sealing gasket 22 onto container 21 or onto cover 23.

While the embodiment of the invention illustrated in Figures 4 and 5 is a miniature air cell, it is to be understood that the invention applies to electrochemical cells generally, including alkaline cells such as AA, AAA, AAAA, C and D cells.

The sealing member, as for example illustrated in Figure 1 by seal 32 or in Figures 4 and 5 by sealing gasket 22, is made from, or comprised of, a styrenic polymer blend.

A suitable styrenic polymer blend which can be used in the practice of this invention is high impact polystyrene (HIPS). High impact polystyrene is produced by dissolving polybutadiene rubber in styrene monomer. As styrene polymerises it forms a continuous phase around discrete polybutadiene phases with occlusions of polystyrene. The styrene monomer is polymerised with traditional catalysts and is therefore in the atactic amorphous phase. Some of the rubber is chemically grafted to the polystyrene phase. Therefore, HIPS has excellent toughness through the intimate incorporation of the polybutadiene rubber.

Another preferred styrenic polymer blend is super high impact polystyrene, sold by Dow Chemical Company under the trade name AIM®. AIM® is a HIPS-like product with improved incorporation of the rubbery phase. Hence, AIM® is a very tough material and is an excellent material for preparing the sealing members of this invention. AIM® differs from impact modified general purpose polystyrene, impact modified syndiotactic polystyrene and conventional high impact polystyrene in that it exhibits improved plastic deformation characteristics. Specifically, AIM® can undergo a yield and ductile deformation similar to nylon. This allows the material to experience higher strains than impact modified general purpose polystyrene, impact modified syndiotactic polystyrene and conventional high impact polystyrene before cracking of the sealing member and leakage of the galvanic cells can occur.

Unmodified styrenic materials such as general purpose polystyrene and syndiotactic polystyrene would be ideal materials for sealing members for galvanic cells containing an alkaline electrolyte because of their relatively low cost, good processing characteristics, moisture independent physical characteristics, and resistance to alkaline media. However, unmodified styrenic materials are excessively brittle.

In the case of high impact polystyrene and super high impact polystyrene, the styrenic polymer phase may comprise from 60% to 95%, and the rubbery phase may comprise from 5% to 40% by weight, based on the total weight of the styrenic phase and the rubbery phase.

We have also discovered that while sealing members prepared from the styrenic polymer blends described above exhibit several outstanding performance characteristics as compared with conventional nylon battery sealing members, the styrenic polymer sealing members can sometimes exhibit unacceptable leakage, especially at higher temperatures. This problem is due to the relatively high rate of stress relaxation of the styrenic polymer blends. This problem can be overcome by changing the design of the sealing member to counteract the effects of stress relaxation, e.g., such as by using a resilient or springy retainer or washer which acts on the sealing member to compensate for stress relaxation. However, as another alternative which does not require design changes, the styrenic polymer blends can be modified by adding an anti-stress relaxation agent.

For example, poly(phenylene oxide) (PPO) can be added to the styrenic polymer blend to reduce stress relaxation. An amount of anti-stress relaxation which is effective to achieve a desired reduction in stress relaxation can be easily determined by those having ordinary skill in the art by conducting routine experiments. An example of a commercially available styrenic polymer blend exhibiting reduced stress relaxation is available from GE Plastics under the trade name Noryl®. The Noryl® products are a blend of HIPS and PPO. Noryl® EM6101 exhibits a suitable combination of properties for use as a battery seal material and will lower the overall cost of alkaline cells while allowing for even lower profile sealing members than nylon. Based on standardised bench top tests, Noryl® blends have better thermal, creep and stress relaxation resistance than nylon and other conventional materials. Adding PPO to styrenic seal materials does not decrease their chemical stability in the in-cell environment.

Other types of anti-stress relaxing agents include inorganic fillers such as talc, calcium carbonate, carbon black, and silica.

INITIAL MOULDING TRIAL

Various tests were conducted which demonstrate that the styrenic polymeric blend materials have certain performance characteristics which provide improved galvanic cell sealing member performance.

Galvanic cell sealing members were moulded from high impact polystyrene containing 7.5% butadiene rubber. The sealing members were installed in AA type batteries with minimum processing adjustments.

The sealing members performed favourably with some cracking upon installation of the rivets. However, it must be understood that the moulds used were designed to make nylon sealing members. The moulds have dimensions which will be different from those of moulds which are designed specifically for moulding sealing members of high impact polystyrene blends. This difference is attributable to the fact that the amount of moisture absorbed by the nylon is lower during moulding than during use, which result in the nylon sealing member having different dimensions during use than immediately after moulding. In contrast, high impact polystyrene blends do not absorb significant amounts of moisture and do not experience any appreciable dimensional changes during use, as compared with immediately after moulding. It is expected that the cracking observed in some cases during installation of the high impact polystyrene sealing members will be reduced or eliminated when moulds specially designed for moulding the styrenic polymer based sealing members are used.

OXIDATION TESTING

The HIPS and AIM® products both contain polybutadiene rubber. Polybutadiene rubber contains unsaturated bonds which are susceptible to oxidative attack. Oxidation of the rubber content will embrittle the material and change is performance. Alkaline galvanic sealing members were moulded from HIPS with a thin section for rupture to relieve high internal cell pressures. The pressure at which the thin section ruptures is a function of the design and the material properties of the sealing member. The data (shown in Table 1) demonstrate that the vent pressure does not change after thermal oxidative ageing. Additionally, gel permeation chromatography analysis results (shown in Table 2) demonstrate that the molecular weight of the HIPS product increases minimally after 10 weeks at 71°C. Accordingly, oxidation of HIPS and AIM® should not be a significant problem in this application.

TABLE 1

| Material | Vent Pressure, (MPa (psi))* |
|---|---|
| HIPS | 5.30±0.19 (769±27) |
| HIPS - aged 10 weeks in air at 71°C | 5.54±0.34 (804±50) |

*All data presented in this document with ± standard deviation

TABLE 2

| Material | Number Average Molecular Weight, Mn | Weight Average Molecular Weight, Mw | Polydispersity (Mn/Mw) |
|---|---|---|---|
| HIPS | 127,000±200 | 227,000±1,000 | 1.79±0.01 |
| HIPS - aged 10 weeks in air at 71°C | 129,00±100 | 241,000± 500 | 1.88±0.00 |

GLASS TRANSITION TEMPERATURE

The glass transition temperature of a plastic material is the temperature at which the amorphous phase of the material undergoes a transition from a glassy state to a flexible state involving motion of long segments in the polymer chain. Near and above the glass transition temperature, the material will undergo increased stress relaxation and creep. The glass transition temperature for various materials is shown in Table 3. The data indicates that the styrenic materials have two advantages when used as a sealing member for galvanic cells having an alkaline electrolyte. First, because styrenes do not absorb water, the glass transition temperature does not depend upon moisture. Second, the glass transition temperature of the polystyrene matrix, which dominates the relaxation behaviour, is higher than polypropylene and nylon 66 at any moisture level. High temperatures for battery end use can be as high as 85°C. Therefore, the styrenic polymer based materials undergo less stress relaxation and less creep than nylon 66.

TABLE 3

| Material | Glass Transition Temperature, °C |
|---|---|
| Nylon 66 - dry as moulded | 80°C[1] |
| Nylon 66 - 2.5% $H_2O$ | 40°C[1] |
| Nylon 66 - 8.5% $H_2O$ | -15°C[1] |
| Talc Filled Polypropylene Homopolymer | 11°C |
| HIPS | 100°C |

TABLE 3 (continued)

| Material | Glass Transition Temperature, °C |
|---|---|
| AIM | 100°C |

## LINEAR THERMAL EXPANSION

Thermal cycling of batteries occurs during their lifetime. Accordingly, preferred sealing member materials should undergo minimal thermal expansion, i.e., have lower co-efficiency of linear thermal expansion. The data shown in Table 4 indicates that, except for general purpose polystyrene, styrene materials have a co-efficient of linear thermal expansion which is as low or lower than nylon.

TABLE 4

| Material | Coefficient of liner thermal expansion x 10$^{-5}$ (cm/cm/K) @ 25°C |
|---|---|
| Nylon 66 | 8.1 |
| Talc Filled Polypropylene Homopolymer | 9.8 |
| HIPS | 6.8 |
| AIM | 8.1 |

## DEFLECTION TEMPERATURE UNDER LOAD - ASTM D648

The heat resistance of a galvanic sealing member is crucial to maintaining a seal and preventing leakage of electrolyte. The deflection temperature under load (DTUL) is a normalised method of determining the temperature at which a material is deflected under a specified amount of load. A higher DTUL indicates that a material has better resistance properties. The data shown in Table 5 indicates that at the lowest stress, nylon 66 has the most heat resistance. However, at loads closer to those normally experienced by a sealing member in a galvanic cell, AIM® with low moulded-in stress and impact modified syndiotactic polystyrene show the most heat resistance. Nylon 66 has less heat resistance as it absorbs moisture. The styrenic based materials do not have this deficiency because they do not absorb water. From this analysis, styrenic based materials are expected to have better heat resistance properties, as they relate to sealing members for galvanic cells, than nylon and filled polypropylene.

TABLE 5

| Material | @ 0.46 MPa (66 psi) (°C) | @ 1.82 MPa (264 psi) (°C) |
|---|---|---|
| Nylon 66 - dry as moulded | 210-243[3] | 65-90 |
| Talc Filled Polypropylene Homopolymer | - | 82 |
| HIPS | - | 78-82 |
| AIM - low moulded-in stress | 96 | 93 |
| AIM - high moulded-in stress | 85 | 74 |

## PHYSICAL PROPERTIES

A comparison of the ultimate tensile strength, ultimate elongation, and toughness (notched Izod) of various materials is set forth in Tables 6, 7 and 8, respectively. Table 6 shows that the ultimate tensile strength of the styrenic polymer based materials is less than 50% of the ultimate tensile strength of nylon 66, and about the same or lower than the ultimate tensile strength of talc filled polypropylene homopolymer. The lower ultimate tensile strength of styrenic based polymeric materials is an advantage with respect to the moulding of sealing members for galvanic cells. In particular, because of the lower ultimate tensile strength of the styrenic polymer based materials, they can be moulded with relatively thicker sections, which makes the moulding process easier.

TABLE 6

| Material | Ultimate Tensile Strength (MPa (psi)) | |
|---|---|---|
| Nylon 66 | Dry as moulded | 2.5% $H_2O$ |
| | 82.7 (12,000) | 77.2 (11,200) |
| Talc Filled Polypropylene Homopolymer | 36.5 (5,300) | |
| HIPS | 25.5 (3,700) | |
| AIM | 22.1 (3,200) | |

As shown in Table 7, the styrenic polymer based materials, especially the impact modified styrenic materials, and most particularly the impact modified syndiotactic polystyrene, have lower percentage elongation at break than nylon 66. The lower percentage elongation at break of the styrenic polymer based materials may be advantageously employed in the fabrication of galvanic cells. In particular, the amount of internal volume of the galvanic cell which is needed to allow expansion and rupture of the sealing member in the event of excessive internal pressure can be significantly reduced. A reduction in the amount of space need for expansion and rupture of the sealing member in the event of excessive pressure within the galvanic cell can be advantageously utilised for other purposes, such as to design cells having improved service life or discharge capacity.

TABLE 7

| Material | % Elongation | at Break |
|---|---|---|
| Nylon | dry as moulded | 2.5% $H_2O$ |
| | 52 | $\geq$300 |
| HIPS | 35 | |
| AIM | 50 | |

The result shown in Table 8 demonstrates that the styrenic based polymer materials are generally as tough or tougher than nylon 66. This increased toughness decreases leakage due to cracking or breakage of the sealing member during installation of the sealing member into a galvanic cell.

TABLE 8

| Material | (N (ft lb/in)) | |
|---|---|---|
| Nylon 66 | dry as moulded | 2.5% $H_2O$ |
| | 53(1.0) | 110(2.1) |
| HIPS | 130(2.5) | |
| AIM | 290(5.5) | |

EP 1 145 344 B1

<u>SURFACE ENERGY</u>

Leakage of aqueous galvanic cells can occur when aqueous solution travels between the plastic and metal interface in the compressive sealing zone. A lower surface energy plastic will inhibit this migration compared to a high surface energy plastic. The data shown in Tables 9 and 10 indicates that styrenic polymer based materials have lower surface energy and higher water contact angles than nylon 66. Accordingly, sealing members made of the styrenic polymer based materials will have inherently better leakage performance than nylon sealing members.

TABLE 9

| Material | Critical Surface Tension of Wetting (mN/cm (dynes/cm)) | |
| --- | --- | --- |
| Nylon 66 | 0.46 | (46) |
| Polystyrene | 0.33 | (33) |
| Impact Modifiers | near 0.30 | (near 30) |

TABLE 10

| Material | Water Contact Angle (°) |
| --- | --- |
| Nylon 66 | 45-50* |
| all styrene based materials | 90-100 |

*Decreases with increased moisture content of nylon material and with time in contact with surface.

<u>MOISTURE ABSORPTION</u>

Absorption of moisture has three negative effects: (1) the material requires drying before moulding, (2) the moulded part will change dimensions as a function of moisture content and hence relative humidity, and (3) the properties of the moulded part will change as a function of moisture content, and hence relative humidity. As shown in Table 11, the styrenic polymer based materials do not absorb an appreciable amount of water and therefore do not have these unwanted side effects.

TABLE 11

| Material | Equilibrium moisture (%) content in 50% RH | Equilibrium moisture (%) content in 100% RH |
| --- | --- | --- |
| Nylon 66 | 2.5 | 8.5 |
| Polysulphone | - | 0.85 |
| HIPS | <0.1 | <0.1 |
| AIM | <0.1 | <0.1 |

<u>HYDROGEN PERMEABILITY</u>

Hydrogen gas is produced in many galvanic cells. Internal pressures of galvanic cells can become dangerously high. Accordingly, a seal material that allows the permeation of hydrogen will increase the safety of the cell. As shown in Table 12, the styrenic polymer based materials have a significantly higher hydrogen permeability than conventional galvanic cell seal materials (such as nylon 66, polypropylene and polysulphone).

8

TABLE 12

| Material | cc•μm/cm$^2$•day•atm (cc•mil/100in$^2$•day•atm) |
|---|---|
| Nylon 66 | 1.3 (33) |
| Talc Filled Polypropylene Homopolymer | 19.0 (480) |
| Polysulphone | 71 (1800) |
| all styrene based materials | 120 (3000) |

INJECTION MOULDING

As illustrated in Table 13, amorphous styrene tend to cool much quicker than polypropylene or nylon 66. The cooling times set forth in Table 13 are an indication of the amount of time after injection moulding which is required for cooling and solidification of the moulded part before it can be removed from the mould. Shorter cooling times result in shorter moulding cycle times and higher production rates for a given moulding apparatus.

TABLE 13

| wall thickness (mm) | Cooling Time (seconds)[4] | | |
|---|---|---|---|
| | Amorphous Styrenes | Polypropylene | Nylon 66 |
| 0.5 | 1.0 | 1.8 | - |
| 1.0 | 2.9 | 4.5 | 3.8 |
| 1.5 | 5.7 | 8.0 | 7.0 |

Because the styrenic polymer based materials do not absorb appreciable amounts of moisture, drying of the styrenic polymer based materials is not required before moulding. All nylons require strict control of the resin moisture between 0.10% and 0.25% by weight. Below 0.10% by weight solid state polymerisation can occur in nylon, increasing the viscosity of the melt and making it difficult to fill the mould. Above 0.25% moulded-in bubbles and flash occur.

INITIAL SEAL PERFORMANCE

As stated above, the styrenic polymer based materials have lower tensile strengths than nylon. A manifestation of this lower tensile strength is lower than pressures for seals having a given thickness in the area which is designed to rupture, or styrenic based polymer seals which are thicker in the area which is designed to rupture at a given pressure. Identically configured seals made of various materials were tested to determine the pressure at which the vent area of the seal would rupture. These results are set forth in Table 14. Because of the lower tensile strength of the styrenic polymer based materials, the rupture areas of the seals can be made thicker. This allows easier injection moulding of the seals.

TABLE 14

| Material | Vent Pressure, (Mpa (psi)) |
|---|---|
| Nylon 66 | Near 8.3 (near 1200) |
| HIPS | 5.30±0.19 (769±27) |

SUMMARY OF EXPERIMENTAL RESULTS

The data set forth above demonstrates that the styrenic polymer blends have highly advantageous properties for use in forming a sealing member for a galvanic cell, especially sealing members for cells having an alkaline electrolyte. The data show that polyamides (such as nylon) are susceptible to chemical attack by the chemical environment of the battery. Polyamides also absorb moisture from the environment that change their dimensions and mechanical properties. Polypropylenes (mineral filled and un-filled) undergo extensive softening at temperatures experienced by the battery (e.g., 70-80°C) which can cause leakage and unreliable performance. Polysulphone is costly, requires extremely high temperatures and low moisture levels to properly manufacture the seal via injection moulding.

**EXPERIMENTAL:**

***Cell Trial***

AA factory product seals were moulded from Noryl® EM6101. These seals were moulded with a mould temperature 93°C (200°F) and a melt temperature of 293°C (560°F). Two hundred seals were assembled into collectors and then assembled into into AA cells.

***Chemical Stability of Noryl®***

3.2 mm (one-eighth inch) thick plaques of Noryl® EM6101 were moulded. Sections of these were placed in 37% KOH or a EMD slurry with KOH at 71 °C for 16 weeks. These samples were then analysed for chemical degradation by measuring their molecular weight via gel permeation chromatography (GPC). If any degradation was to occur, it would be concentrated at the surface where the Noryl® was in contact with the corrosive environment. Therefore, the upper 10μm of the samples' surfaces were collected by slicing it off with a microtome. It was this 10μm thick shaving that was dissolved for GPC analysis.
GPC analysis was performed. Molecular weight statistics were calculated using the following definitions.

$$\text{Number Average Molecular Weight, } Mn = \Sigma N_i M_i / \Sigma N_i$$

$$\text{Weight Average Molecular Weight, } Mn = \Sigma N_i M^2_i / \Sigma N_i M_i$$

Wherein $N_i$ is the number of polymer chains of molecular weight $M_i$

The number average molecular weight is simply the mean weight of all the polymer chains in the sample. The weight average molecular weight is the second moment of the distribution where the chains with higher weight count more toward its value. If the polymer chains is a sample are all equal in length then the number average and weight average are equal (the polydispersity (Mn/Mw) is unity).

**RESULTS AND DISCUSSION:**

**Chemical Compatibility of Noryl**

Table 15 shows the GPC results from accelerated ageing of Noryl® EM6101. The data reveals that the molecular weight of the surface of Noryl® EM6101 does not change with treatment in the harsh KOH and EMD environments. As shown previously, HIPS is much more stable to these harsh environments than Zytel® 101F. Adding PPO to HIPS does not decrease the stability of HIPS since no hydrolytic or oxidative chain scission occurred during the treatment of the Noryl.

TABLE 15

|  | CONTROL | 71°C KOH | 71°C MnO$_2$ |
|---|---|---|---|
| Mn | 8,000 | 9,000 | 8,000 |
| Mw | 36,000 | 35,000 | 32,000 |
| PDI 5000 | 22,000 | 19,000 | 18,000 |

***Improved Thermal and Creep Properties***

Table 16 shows the heat deflection temperatures (HDT) of Zytel® 101F, and Noryl® EM6101. Heat deflection temperatures are obtained by placing a fixed load on a test specimen and the heat of the specimen is increased until the specimen softens enough to deflect a given distance. Therefore, HDT measures the creep of a material as temperature increases. The higher the HDT, the more resistance the material is to heat and creep. The data clearly show that Noryl® EM6101 is the most resistant material to heat and creep. The increased resistance is due to the PPO in the Noryl.

TABLE 16

| MATERIAL | HEAT DEFLECTION TEMPERATURE |
|---|---|
| Nylon 66-dry | 90 |
| HIPS | 78 |
| Noryl® EM6101 | 121 |

*Improved Stress Relaxation Properties*

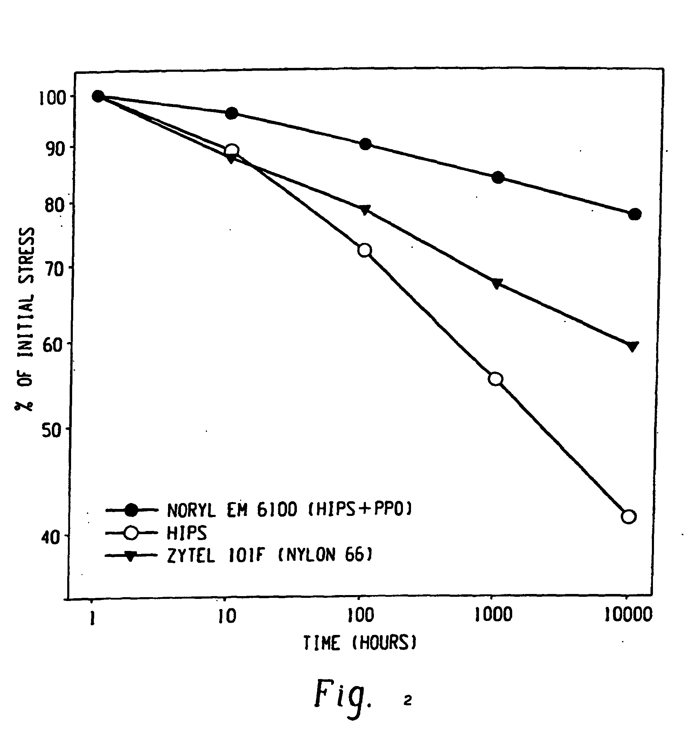

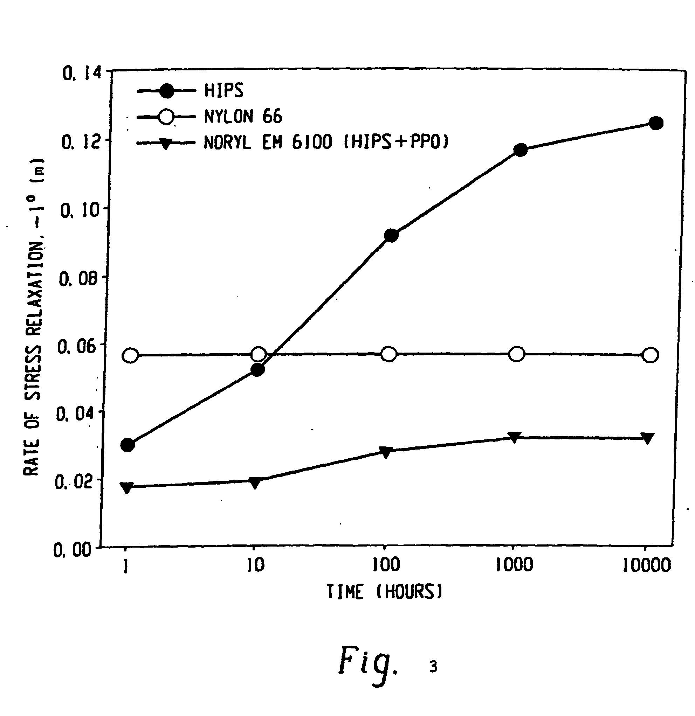

The reason for poor leakage performance for styrenic seal materials was their inherently high rate of stress relaxation. The increased HDT of Noryl's would suggest that the rate of stress relaxation of these materials should also be decreased, lending to improved leakage performance. Figure 2 below displays the stress relaxation of Zytel® 101F, HIPS, and Noryl® 6100. Figure 3 graphically displays the rate of stress relaxation. These graphs show that the stress in Noryl decays out at the lowest rate. Therefore, it is expected to maintain the compressive stress in the sealing zone of an alkaline sealing member the longest and hence give the best leakage resistance.

It is understood that the embodiments shown in the drawings and described above are merely for illustrative purposes and not intended to limit the scope of the invention.

**Claims**

1. A galvanic cell having a sealing member formed of a styrenic polymer blend, wherein the styrenic polymer blend is formed of polystyrene and polybutadiene rubber, and comprises a styrenic phase and discrete rubbery phase..

2. A cell according to claim 1, wherein the styrenic phase comprises from 60 to 95% by weight and the rubbery phase comprises from 5 to 40% by weight, based on the total weight of the styrenic phase and the rubbery phase.

3. A cell according to claim 1 or claim 2, wherein the styrenic polymer blend includes an anti-stress relaxation agent.

4. A cell according to claim 3, wherein the anti-stress relaxation agent is poly(phenylene oxide).

5. A cell according to claim 3, wherein the anti-stress relaxation agent is an inorganic filler, preferably selected from talc, calcium carbonate, carbon black, and silica.

6. A cell according to any preceding claim, wherein the sealing member is configured as a gasket for use in a miniature cell.

7. A cell according to claim 6, wherein the cell is a miniature alkaline air cell and the sealing member is a gasket for the miniature alkaline air cell.

**Patentansprüche**

1. Galvanische Zelle mit einem Dichtungselement, das aus einem Styrolpolymergemisch geformt wird, wobei das Styrolpolymergemisch aus Polystyrol und Polybutadienkautschuk besteht und eine Styrolphase sowie eine diskrete kautschukelastische Phase aufweist.

2. Zelle nach Anspruch 1, wobei die Styrolphase 60 bis 95 Gew.-% und kautschukelastische Phase 5 bis 40 Gew.-% aufweist, bezogen auf das Gesamtgewicht der Styrolphase und der kautschukelastischen Phase.

3. Zelle nach Anspruch 1 oder Anspruch 2, wobei das Styrolpolymergemisch ein Entspannungsmittel enthält.

**4.** Zelle nach Anspruch 3, wobei das Entspannungsmittel Poly(phenylenoxid) ist.

**5.** Zelle nach Anspruch 3, wobei das Entspannungsmittel ein anorganischer Füllstoff ist, der vorzugsweise unter Talkum, Calciumcarbonat, Ruß und Siliciumdioxid ausgewählt wird.

**6.** Zelle nach einem der vorstehenden Ansprüche, wobei das Dichtungselement als Dichtungsmanschette in einer Miniaturzelle konfiguriert ist.

**7.** Zelle nach Anspruch 6, wobei die Zelle eine alkalische Luft-Miniaturzelle und das Dichtungselement eine Dichtungsmanschette für die alkalische Luft-Miniaturzelle ist.


**Revendications**

**1.** Pile galvanique possédant un élément d'étanchéité formé d'un mélange de polymère styrénique, dans laquelle le mélange de polymère styrénique est formé d'un polystyrène et d'un caoutchouc de polybutadiène et comprend une phase styrénique et une phase discrète de caoutchouc.

**2.** Pile suivant la revendication 1, dans laquelle la phase styrénique constitue de 60 à 95% en poids et la phase de caoutchouc constitue de 5 à 40% en poids, sur la base du poids total de la phase styrénique et de la phase de caoutchouc.

**3.** Pile suivant la revendication 1 ou la revendication 2, dans laquelle le mélange de polymère styrénique inclut un agent de relaxation anti-contrainte.

**4.** Pile suivant la revendication 3, dans laquelle l'agent de relaxation anti-contrainte est un poly(oxyde de phénylène).

**5.** Pile suivant la revendication 3, dans laquelle l'agent de relaxation anti-contrainte est une charge inorganique, de préférence choisie parmi du talc, du carbonate de calcium, du noir de carbone et de la silice.

**6.** Pile suivant l'une quelconque des revendications précédentes, dans laquelle l'élément d'étanchéité est configuré comme un joint d'étanchéité pour une utilisation dans une pile miniature.

**7.** Pile suivant la revendication 6, dans laquelle la pile est une pile à air alcaline miniature et l'élément d'étanchéité est un joint d'étanchéité pour la pile à air alcaline miniature.

Fig. 1

Fig. 2

*Fig.* 3

*Fig.* 4

*Fig.* 5